# EUROPEAN PATENT APPLICATION

(11) **EP 2 581 554 A2**
(43) Date of publication of application: **17.04.2013**
(21) Application number: 12188409.2
(22) Date of filing: 12.10.2012
(51) Int. Cl.: F01D 5/08, F01D 9/06, F02C 7/12

(54) **System for cooling fluid flow within an engine**

(30) Priority: 14.10.2011 US 201113274206
(71) Applicant: General Electric Company, Schenectady, NY 12345 (US)
(72) Inventor: Pugalenthi, Nandagopal, 560066 Bangalore, Karnataka (IN); Rao, Ganti Sanyaswara, 560066 Bangalore, Karnataka (IN)
(74) Representative: Cleary, Fidelma

(57) **Abstract**

A system includes an engine having a first fluid pathway (36) and a second fluid pathway (50) at least partially adjacent to one another. The system also includes a solid-state heat exchanger (38) configured to transfer heat from the first fluid pathway (36) to the second fluid pathway (50) upon application of an electrical current to the solid-state heat exchanger (38).

## Description

### BACKGROUND OF THE INVENTION

The disclosed subject matter relates to a system for cooling fluid flow within an engine.

Certain power generation systems include a gas turbine engine configured to combust a mixture of fuel and compressed air to produce hot combustion gas. The combustion gas may flow through a turbine to generate power for a load, such as an electric generator. Certain turbines include a wheel space positioned outside of the combustion gas flow path, and including temperature sensitive components. Unfortunately, the hot combustion gas may leak through a seal separating the flow path from the turbine wheel space, thereby raising the temperature of the wheel space components.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In one aspect, a system includes an engine having a first fluid pathway and a second fluid pathway at least partially adjacent to one another. The system also includes a solid-state heat exchanger configured to transfer heat from the first fluid pathway to the second fluid pathway upon application of an electrical current to the solid-state heat exchanger.

In another aspect, a system includes an engine having a first fluid pathway and a second fluid pathway at least partially adjacent to one another. The system also includes a solid-state heat exchanger configured to transfer heat from the first fluid pathway to the second fluid pathway upon application of an electrical current to the solid-state heat exchanger. In addition, the system includes a controller configured to maintain a desired fluid temperature within the first fluid pathway by adjusting the electrical current to the solid-state heat exchanger.

In a further aspect, a system includes a gas turbine engine having a first fluid pathway configured to convey a first compressed air extracted from a compressor to a turbine wheel space. The gas turbine engine also includes a second fluid pathway configured to transfer a second compressed air discharged from the compressor. In addition, the system includes a heat exchanger configured to transfer heat from the first fluid pathway to the second fluid pathway.

### BRIEF DESCRIPTION OF THE DRAWINGS

Embodiments of the present invention will now be described, by way of example only, with reference to the accompanying drawings in which:
FIG. 1 is a block diagram of an exemplary turbine system including an embodiment of a heat exchanger configured to reduce fluid temperature within a fluid pathway;
FIG. 2 is a schematic diagram of a portion of a turbine system including an embodiment of a heat exchanger configured to transfer heat between adjacent fluid pathways; and
FIG. 3 is a perspective view of a solid-state heat exchanger that may be employed within the turbine system of FIG. 2.

### DETAILED DESCRIPTION OF THE INVENTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Certain gas turbine engines include a fluid pathway extending from a compressor stage to a turbine wheel space. The fluid pathway is configured to provide pressurized air to the turbine wheel space, thereby providing a barrier between the hot combustion gas and the turbine wheel, the turbine shaft, and/or other temperature sensitive components of the turbine. The pressurized air also serves to provide a cooling flow to various turbine components. When the gas turbine engine is operating in a high ambient temperature environment (e.g., above about 27 degrees Celsius), the pressurized air from the compressor stage may provide insufficient cooling to the turbine wheel space. In certain configurations, bore plugs, which separate the fluid pathway from the compressor discharge air, may be removed to increase air flow to the turbine wheel space. Unfortunately, the increased air flow may reduce turbine efficiency by increasing mixing losses within the turbine. In addition, once the bore plugs have been removed, the passage between the compressor discharge air and the fluid pathway remains open while the gas turbine engine is in operation. Consequently, when the ambient temperature decreases (e.g., at night), an excessive quantity of cool air may be provided to the turbine wheel space, thereby further reducing turbine efficiency.

Certain embodiments of the present disclosure may substantially reduce fluid temperature within a turbine wheel space without increasing fluid flow (e.g., compressed air flow) to the turbine wheel space. For example, certain embodiments include a gas turbine engine having a first fluid pathway configured to convey compressed air extracted from a compressor to a turbine wheel space. The gas turbine engine also includes a second fluid pathway configured to transfer compressed air discharged from the compressor (e.g., to a combustor). A heat exchanger is provided to transfer heat from the first fluid pathway to the second fluid pathway, thereby reducing the temperature of the air flow to the turbine wheel space. For example, when the gas turbine engine is operating in a high ambient temperature environment (e.g., above about 27 degrees Celsius), the heat exchanger may be activated to cool the compressed air flowing through the first fluid pathway. As a result, with the aid of the heat exchanger, the compressed air extracted from the compressor may provide sufficient cooling to the turbine wheel space without directing additional air from the second fluid pathway into the turbine wheel space (e.g., without removing bore plugs separating the first fluid pathway from the second fluid pathway). Because the compressor discharge air does not flow into the turbine wheel space, mixing losses associated with providing excess air flow to the turbine wheel space may be substantially reduced or eliminated. In addition, when the ambient temperature decreases (e.g., at night), the heat exchanger may be deactivated, thereby increasing turbine efficiency by reducing heat exchanger energy utilization. In certain embodiments, the heat exchanger may be a solid-state heat exchanger having a low profile suitable for use within the tight spaces of a gas turbine engine.

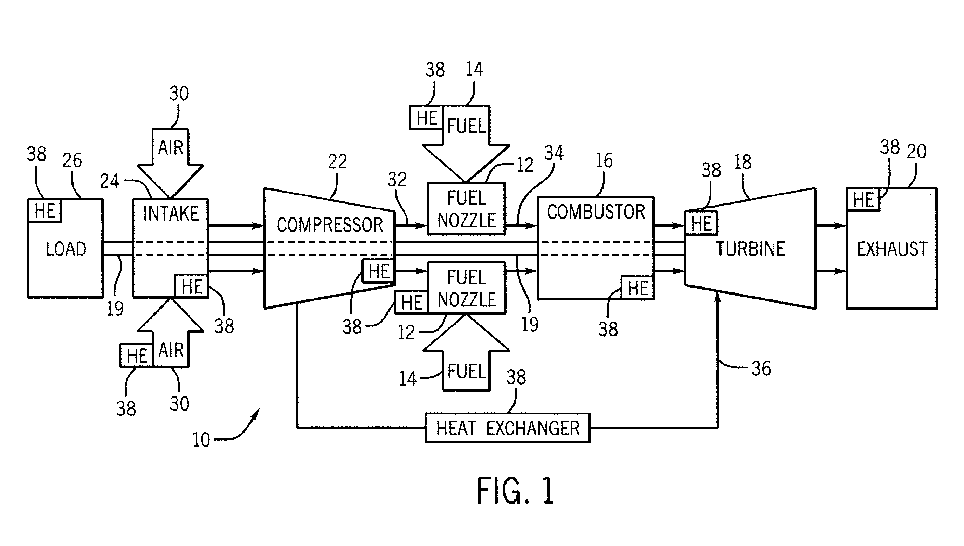

Turning now to the drawings, FIG. 1 is a block diagram of a turbine system 10 (e.g., gas turbine engine) including an embodiment of a heat exchanger configured to reduce fluid temperature within a fluid pathway, such as a fluid pathway extending to a turbine wheel space. The turbine system 10 includes a fuel injector 12, a fuel supply 14, and a combustor 16. As illustrated, the fuel supply 14 routes a liquid fuel and/or gas fuel, such as natural gas, to the gas turbine system 10 through the fuel injector 12 into the combustor 16. As discussed below, the fuel injector 12 is configured to inject and mix the fuel with compressed air. The combustor 16 ignites and combusts the fuel-air mixture, and then passes hot pressurized combustion gas into a turbine 18. As will be appreciated, the turbine 18 includes one or more stators having fixed vanes or blades, and one or more rotors having blades that rotate relative to the stators. The combustion gas passes through the turbine rotor blades, thereby driving the turbine rotor to rotate. Coupling between the turbine rotor and a shaft 19 causes the shaft 19 to rotate, thereby driving several components throughout the gas turbine system 10, as illustrated. Eventually, the combustion gas exits the gas turbine system 10 via an exhaust outlet 20.

A compressor 22 includes blades rigidly mounted to a rotor which is driven to rotate by the shaft 19. As air passes through the rotating blades, air pressure increases, thereby providing the combustor 16 with sufficient air for proper combustion. The compressor 22 may intake air to the gas turbine system 10 via an air intake 24. Further, the shaft 19 may be coupled to a load 26, which may be powered via rotation of the shaft 19. As will be appreciated, the load 26 may be any suitable device that may use the power of the rotational output of the gas turbine system 10, such as a power generation plant or an external mechanical load. For example, the load 26 may include an electrical generator, a propeller of an airplane, and so forth. The air intake 24 draws air 30 into the gas turbine system 10 via a suitable mechanism, such as a cold air intake. The air 30 then flows through blades of the compressor 22, which provides compressed air 32 to the combustor 16. In particular, the fuel injector 12 may inject the compressed air 32 and fuel 14, as a fuel-air mixture 34, into the combustor 16. Alternatively, the compressed air 32 and fuel 14 may be injected directly into the combustor for mixing and combustion.

In the illustrated embodiment, the system 10 includes a fluid pathway 36 extending from a stage of the compressor 22 (e.g., intermediate compressor stage) to a wheel space within the turbine 18. The fluid pathway 36 is configured to provide compressed air extracted from the compressor 22 to the turbine wheel space, thereby providing a barrier between the hot combustion gas and the turbine wheel, the turbine shaft, and/or other temperature sensitive components of the turbine 18. The compressed air also serves to provide a cooling flow to various turbine components. The turbine system 10 also includes a heat exchanger 38 in fluid communication with the fluid pathway 36. The heat exchanger 38 is configured to transfer heat from the extraction air fluid pathway 36 to another fluid pathway within the turbine system 10 (e.g., a compressor discharge fluid pathway), thereby reducing the temperature of the air flow to the turbine wheel space. For example, when the turbine system 10 is operating in a high ambient temperature environment (e.g., above about 27 degrees Celsius), the heat exchanger 38 may be activated to cool the compressed air flowing through the fluid pathway 36. As a result, with the aid of the heat exchanger 36, the compressed air extracted from the compressor 22 may provide sufficient cooling to the turbine wheel space without directing additional compressor discharge air into the turbine wheel space. Consequently, the turbine wheel space may be maintained at a desired temperature (e.g., less than about 400 degrees Celsius), and the mixing losses associated with providing excess air flow to the turbine wheel space may be substantially reduced or eliminated. In addition, when the ambient temperature decreases (e.g., at night), the heat exchanger 38 may be deactivated, thereby increasing turbine efficiency by reducing heat exchanger energy utilization.

While a heat exchanger configured to cool extraction air provided to a turbine wheel space is described below, it should be appreciated that other heat exchangers may be employed throughout the turbine system 10 to transfer heat between adjacent fluid pathways. For example, in certain embodiments, the heat exchanger 38 may be a solid-state heat exchanger having a low profile suitable for use within the tight spaces of the gas turbine engine 10. As illustrated, solid-state heat exchangers 38 may be utilized to transfer heat between adjacent fluid pathways within the load 26, the intake 24, the air supply 30, the compressor 22, the fuel nozzle 12, the fuel supply 14, the combustor 16, the turbine 18, and/or the exhaust 20. Furthermore, it should be appreciated that solid-state heat exchangers 38 may be utilized to transfer heat between a first fluid pathway within one component (e.g., compressor, combustor, turbine, etc.), and a second fluid pathway within another component (e.g., compressor, combustor, turbine, etc.). In addition, solid-state heat exchangers 38 may be used to cool or heat fluid within pathways extending between the turbine system components. Furthermore, while certain illustrated embodiments employ a solid-state heat exchanger to transfer heat between adjacent fluid pathways within a gas turbine engine 10, it should be appreciated that alternative embodiments may utilize the solid-state heat exchanger to transfer heat between adjacent fluid pathways within other engine configurations (e.g., reciprocating engines, rotary engines, etc.).

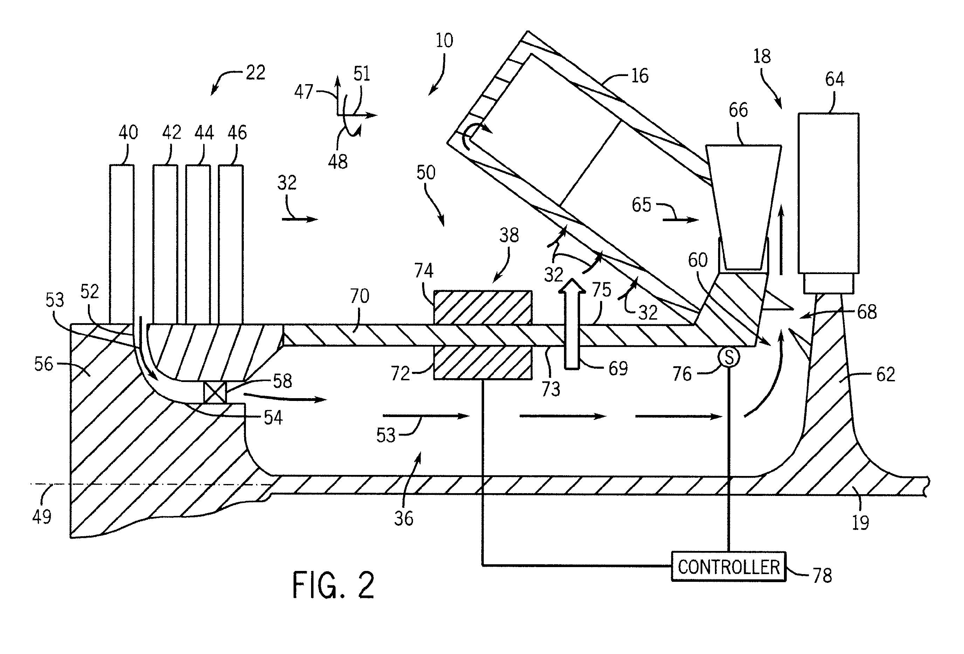

FIG. 2 is a schematic diagram of a portion of a turbine system 10 including an embodiment of a heat exchanger 38 configured to transfer heat between adjacent fluid pathways. As illustrated, the compressor 22 includes multiple stages configured to progressively increase the pressure of an air flow to the combustor 16. In the illustrated embodiment, the compressor 22 includes first stage blades 40, second stage blades 42, third stage blades 44, and fourth stage blades 46. As illustrated, each blade extends outwardly along a radial direction 47, and the blades of each stage are substantially evenly distributed about the compressor 22 along a circumferential direction 48. Rotation of the blades about a rotation axis 49 generates a flow of discharge air 32 through a fluid pathway 50 along an axial direction 51. While the illustrated embodiment includes four compressor stages, it should be appreciated that alternative embodiments may include more or fewer compressor stages (e.g., 1, 2, 3, 4, 6, 8, 10, 12, 14, 16, 18, or more).

In the illustrated embodiment, the turbine system 10 includes a port 52 positioned between the first stage blades 40 and the second stage blades 42. The port 52 is configured to extract compressed air 53 from the first compressor stage (e.g., air compressed by the first stage blades 40). As will be appreciated, fluid pressure increases as the air is progressively compressed by each compressor stage. Consequently, the port 52 may be positioned between an appropriate pair of stages to extract air having a desired pressure. As illustrated, the port 52 is coupled to a conduit 54 extending through a rotor 56 of the gas turbine engine 10. A high pressure packing seal (HPPS) 58 is fluidly coupled to the conduit 54, and configured to facilitate passage of a small portion (e.g., less than about one percent) of the extraction air 53 into the fluid pathway 36. The remainder of the compressed air flows through the downstream compressor stages, and is discharged toward the turbine 18.

In the illustrated embodiment, the extraction air fluid pathway 36 extends from the HPPS 58 to a turbine wheel space 60. As illustrated, the turbine wheel space 60 is positioned adjacent to a turbine wheel 62 configured to couple turbine blades 64 to the shaft 19. As previously discussed, the extraction air fluid pathway 36 is configured to provide compressed air 53 to the turbine wheel space 60, thereby providing a barrier between hot combustion gas and the turbine wheel 62, the turbine shaft 19, and/or other temperature sensitive components of the turbine 18. The extraction air 53 also serves to provide a cooling flow to various turbine components.

As illustrated, the discharge air 32 flows into the combustor 16, and reacts with fuel to generate combustion gas 65 that flows into the turbine 18 along the axial direction 51 and/or the circumferential direction 48. In the illustrated embodiment, the turbine 18 includes a single stage, including first stage vanes 66 and first stage blades 64. As will be appreciated, other turbine configurations may include additional turbine stages (e.g., 1, 2, 3, 4, 5, 6, or more turbine stages). The first stage vanes 66 and blades 64 extend outwardly along the radial direction 47, and are substantially equally spaced in the circumferential direction 48 about the turbine 18. The first stage vanes 66 are rigidly mounted to the turbine 18, and are configured to direct combustion gas 65 toward the blades 64. The first stage blades 64 are mounted to the wheel 62, such that the combustion gas 65 flowing through the blades 64 drives the wheel 62 to rotate. The wheel 62, in turn, is coupled to the shaft 19, which drives the compressor 22 and the load 26. The combustion gas 65 then flows through additional turbine stages, if present. As the combustion gas 65 flows through each stage, energy from the gas is converted into rotational energy of the wheel 62. After passing through each turbine stage, the combustion gas 65 exits the turbine 18 in the axial direction 51.

In the illustrated embodiment, the gas turbine engine 10 includes a seal 68 configured to substantially block a flow of combustion gas 65 into the turbine wheel space 60, thereby protecting temperature sensitive components (e.g., the wheel 62, the shaft 19, etc.) from the hot combustion gas 65. In addition, the turbine system 10 is configured to provide extraction air 53 to the turbine wheel space 60 at a higher pressure than the combustion gas 65, thereby further reducing the possibility of hot combustion gas 65 entering the turbine wheel space 60. For example, the port 52 may be particularly positioned within the compressor 22 to extract air having a higher pressure than the combustion gas 65 at the illustrated turbine stage. In addition to blocking the flow of combustion gas 65 into the turbine wheel space 60, the extraction air 53 also serves to provide a cooling flow to temperature sensitive turbine components (e.g., turbine wheel 62, shaft 19, etc.).

However, when the gas turbine engine 10 is operating in a high ambient temperature environment (e.g., above about 27 degrees Celsius), the extraction air 53 may provide insufficient cooling to the turbine wheel space 60. Consequently, the gas turbine engine 10 includes a heat exchanger 38 configured to transfer heat along a direction 69 through a barrier 70 separating the extraction air fluid pathway 36 from the discharge air fluid pathway 50, thereby cooling the extraction air 53. For example, the heat exchanger 38 may be activated when the ambient temperature increases above a threshold value (e.g., between about 20 to about 40 degrees Celsius, between about 22 to about 35 degrees Celsius, between about 25 to about 30 degrees Celsius, or about 27 degrees Celsius). As a result, a temperature of the extraction air 53 is reduced by the heat exchanger 38, thereby providing effective cooling to the turbine wheel space 60 without directing additional compressor discharge air 32 to the turbine wheel space 60. Consequently, the turbine wheel space 60 may be maintained at a desired temperature (e.g., less than about 400 degrees Celsius), and the mixing losses associated with providing excess air flow to the turbine wheel space 60 may be substantially reduced or eliminated. In addition, when the ambient temperature decreases (e.g., at night), the heat exchanger 38 may be deactivated, thereby increasing turbine efficiency by reducing heat exchanger energy utilization.

In the illustrated embodiment, the heat exchanger 38 is a solid-state heat exchanger configured to transfer heat from the extraction air fluid pathway 36 to the discharge air fluid pathway 50 upon application of an electrical current to the heat exchanger 38. Because the illustrated solid-state heat exchanger 38 may have a lower profile than a vapor compression heat exchanger, the heat exchanger 38 may be disposed within the tight spaces of the gas turbine engine 10. For example, in the illustrated embodiment, the heat exchanger 38 is separated into two portions (e.g., two independent heat exchanger) positioned on opposite sides of the barrier 70. Specifically, a first portion 72 of the heat exchanger 38 is coupled to a first side 73 of the barrier 70 in the extraction air fluid pathway 36, and a second portion 74 of the heat exchanger 38 is coupled to a second side 75 of the barrier 70 in the discharge air fluid pathway 50. In this configuration, the first portion 72 of the heat exchanger 38 is configured to transfer heat from the extraction air 53 to the barrier 70, and the section portion 74 is configured to transfer heat from the barrier 70 to the discharge air 32. By coupling portions of the heat exchanger 38 to each side of the barrier 70, the heat exchanger 38 may provide a desired cooling capacity while reducing surface area coverage on each side of the barrier 70. In alternative embodiments, the heat exchanger 38 may extend through the barrier 70, thereby transferring heat directly from the extraction air fluid pathway 36 to the discharge air fluid pathway 50.

In the illustrated embodiment, a sensor 76 is disposed within the turbine wheel space 60, and configured to output a signal indicative of a fluid temperature (e.g., air temperature) within the turbine wheel space 60. A controller 78, communicatively coupled to the sensor 76, is configured to receive the signal, and to adjust heat transfer of the heat exchanger 38 based on the signal. In certain embodiments, the controller 78 may be configured to adjust an electrical current to the solid-state heat exchanger 38 based on the measured temperature of the turbine wheel space 60, thereby varying the heat transfer capacity of the heat exchanger 38 and providing the desired cooling to the turbine wheel space 60. For example, the controller 78 may be configured to maintain the turbine wheel space 60 at a temperature below a maximum threshold value (e.g., about 400 degrees Celsius). If the temperature of the turbine wheel space 60 increases above the threshold value, the controller 78 may activate the heat exchanger 38 to decrease the temperature of the extraction air 53, thereby providing additional cooling to the turbine wheel space 60. The controller 78 may then regulate the output of the heat exchanger 38 to maintain the turbine wheel space 60 at a temperature below the maximum value. If the extraction air 53 provides sufficient cooling to maintain the turbine wheel space 60 at a temperature below the threshold value without additional cooling, the controller 78 may deactivate the heat exchanger 38 to reduce energy utilization. While a 400 degree Celsius threshold value is described above, it should be appreciated that it may be desirable to maintain the turbine wheel space 60 at a temperature below a higher or lower threshold value (e.g., about 250, 300, 350, 400, 425, 450, 500, or 550 degrees Celsius) depending on the turbine system configuration. For example, in certain embodiments, the maximum threshold temperature may be between about 200 to about 600 degrees Celsius, between about 250 to about 550 degrees Celsius, between about 300 to about 500 degrees Celsius, between about 350 to about 450 degrees Celsius, or between about 400 to about 450 degrees Celsius.

In the illustrated embodiment, the heat exchanger 38 may be configured to decrease a temperature of the extraction air 53 by at least about 10, 20, 30, 40, 50, 60, 70, 80, or 90 degrees Celsius, or more. For example, the heat exchanger 38 may decrease the temperature of the extraction air 53 by about 10 to about 100 degrees Celsius, by about 20 to about 90 degrees Celsius, by about 30 to about 80 degrees Celsius, by about 40 to about 70 degrees Celsius, or by about 50 to about 60 degrees Celsius. However, because the flow rate through the extraction air fluid passage 36 is substantially less than the flow rate through the discharge air fluid passage 50 (e.g., less than about one percent of the compressor air is extracted), the temperature of the discharge air 32 may only slightly increase. For example, in certain embodiments, the ratio of extraction air 53 to the total air flow through the compressor is less than about 0.3, 0.6, 0.8, 1, 1.2, 1.5, or 2 percent, or more. By further example, the ratio of extraction air 53 to the total air flow through the compressor may be between about 0.2 to about 2 percent, between about 0.4 to about 1.8 percent, between about 0.6 to about 1.6 percent, between about 0.8 to about 1.4 percent, or about 1.0 to about 1.2 percent. Consequently, in certain embodiments, if the temperature of the extraction air 53 is reduced by about 25 degrees Celsius, the temperature of the discharge air 32 may increase by about 0.05 degrees Celsius. In addition, if the temperature of the extraction air 53 is reduced by about 50 degrees Celsius, the temperature of the discharge air 32 may increase by about 0.1 degrees Celsius. The slight increase in discharge air temperature may have a negligible effect on combustion and/or flow through the turbine 18.

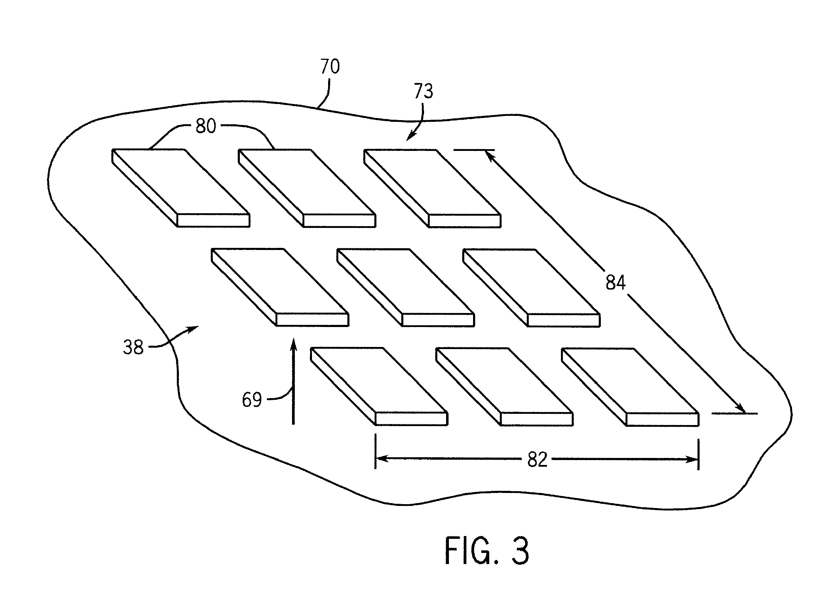

FIG. 3 is a perspective view of a solid-state heat exchanger 38 that may be employed within the turbine system 10 of FIG. 2. As illustrated, the solid-state heat exchanger 38 includes multiple Peltier elements 80 coupled to the first side 73 of the barrier 70. As will be appreciated, each Peltier element 80 is configured to transfer heat in an opposite direction from the ambient thermal gradient upon application of an electrical current to the heat exchanger 38 (e.g., from the cooler extraction air 53 to the warmer discharger air 32). Specifically, each Peltier element 80 includes multiple legs electrically connected in series. Each leg includes a hot junction and a cold junction. Upon application of an electrical current to the Peltier element 80, heat is transferred from the cold junction to the hot junction of each leg, thereby providing a heat flux in the direction 69 from the extraction air 53 to the discharge air 32.

The heat transfer capacity of the heat exchanger 38 is at least partially dependent upon the number of Peltier elements 80, the size of each element 80, the efficiency of each element 80, and the electrical power supplied to the heat exchanger 38. Consequently, the number of Peltier elements 80 (and the resulting coverage area based on the size of each element) may be particularly selected to achieve a desired level of extraction air cooling. For example, the illustrated embodiment includes 9 Peltier elements 80 in a 3-by-3 arrangement. However, it should be appreciated that alternative embodiments may include more or fewer elements 80. For example, certain embodiments may include at least 100, 200, 300, 400, 500, 600, 700, 750, 800, 850, 900, 950, 1000, or more Peltier elements 80 on each side of the barrier 70. In further embodiments, the Peltier elements 80 may only be coupled to the first side 73 of the barrier 70, or to the second side 75 of the barrier 70. In addition, the Peltier elements 80 are distributed about a width 82 and a length 84 of the barrier 70. In certain embodiments, the Peltier elements 80 may cover an area of at least about 0.5, 0.7, 0.9, 1, 1.1, 1.3, or 1.5 square meters, or more.

Furthermore, because the heat transfer capacity of the heat exchanger 38 is at least partially dependent on the supplied electrical current to each Peltier element 80, the controller 78 may regulate heat transfer from the extraction air 53 to the discharge air 32 by varying the electrical current to the heat exchanger 38. For example, if the sensor 76 detects a fluid temperature within the turbine wheel space 60 greater than the maximum threshold temperature (e.g., above about 400 degrees Celsius), the controller 78 may activate the heat exchanger 38 to reduce a temperature of the extraction air 53, thereby cooling the turbine wheel space 60. In addition, the controller 78 may regulate the cooling of the extraction air 53, in a closed-loop manner, to maintain the wheel space 60 at a temperature just below the maximum threshold temperature. As a result, the electrical power utilized by the heat exchanger 38 may be limited to the electrical power sufficient to provide the desired degree of cooling. Consequently, the illustrated embodiment may enhance turbine efficiency, as compared to embodiments that provide additional compressor discharge air to the turbine wheel space 60 and experience mixing losses between the air flow and the combustion gas flow.

While the solid-state heat exchanger 38 described above is configured to transfer heat from the extraction air 53 to the discharge air 32, it should be appreciated that the heat exchanger 38 may be configured to transfer heat from the discharge air 32 to the extraction air 53 by reversing the electrical current flow through each Peltier element 80. Furthermore, while the illustrated solid-state heat exchanger 38 employs Peltier elements 80, it should be appreciated that alternative embodiments may employ other solid-state heat transfer elements, such as thermionic devices, thermotunnel devices and/or thermoacoustic devices. In addition, it should be appreciated that certain embodiments may utilize a vapor compression heat exchanger and/or other heat exchanger configurations to provide the desired degree of cooling to the extraction air 53.

While the solid-state heat exchanger 38 is configured to transfer heat from the extraction air fluid pathway 36 to the discharge air fluid pathway 50 in the illustrated embodiment, it should be appreciated that solid-state heat exchangers may be employed throughout the turbine system 10 to transfer heat between adjacent fluid pathways. For example, in certain embodiments, a solid-state heat exchanger may be utilized to transfer heat from the extraction air fluid pathway 36 to a diluent or fuel flow pathway. In addition, solid-state heat exchangers may be employed to transfer heat from a fluid pathway to an ambient air flow surrounding the turbine system 10. In each configuration, a controller may be employed to adjust the output of the heat exchanger to achieve a desired temperature within the fluid pathway.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A system comprising:
   an engine having a first fluid pathway and a second fluid pathway at least partially adjacent to one another;
   a solid-state heat exchanger configured to transfer heat from the first fluid pathway to the second fluid pathway upon application of an electrical current to the solid-state heat exchanger; and
   a controller configured to maintain a desired fluid temperature within the first fluid pathway by adjusting the electrical current to the solid-state heat exchanger.
2. The system of clause 1, wherein the first fluid pathway is configured to convey a first compressed air extracted from a compressor to a turbine wheel space, and the second fluid pathway is configured to transfer a second compressed air discharged from the compressor.
3. The system of clause 2, comprising a sensor in fluid communication with the turbine wheel space, wherein the sensor is configured to output a signal indicative of a fluid temperature within the turbine wheel space, and the controller is configured to adjust the electrical current to the solid-state heat exchanger based on the signal.
4. The system of any of clauses 1 to 3, wherein the solid-state heat exchanger comprises at least one Peltier element.
5. The system of clause 4, comprising a barrier separating the first fluid pathway from the second fluid pathway, wherein a first Peltier element is coupled to a first side of the barrier within the first fluid pathway, and a second Peltier element is coupled to a second side of the barrier within the second fluid pathway.
6. A system comprising:
   a gas turbine engine, comprising:
      a first fluid pathway configured to convey a first compressed air extracted from a compressor to a turbine wheel space; and
      a second fluid pathway configured to transfer a second compressed air discharged from the compressor; and
      a heat exchanger configured to transfer heat from the first fluid pathway to the second fluid pathway.
7. The system of clause 6, comprising a sensor in fluid communication with the turbine wheel space, wherein the sensor is configured to output a signal indicative of a fluid temperature within the turbine wheel space.
8. The system of clause 6 or 7, comprising a controller configured to maintain a desired temperature within the turbine wheel space by adjusting a heat transfer of the heat exchanger based on the signal.
9. The system of any of clauses 6 to 8, comprising a barrier separating the first fluid pathway from the second fluid pathway, wherein the heat exchanger comprises a solid-state heat exchanger coupled to the barrier.
10. The system of clause 9, wherein the solid-state heat exchanger comprises a plurality of Peltier elements, at least one Peltier element is coupled to a first side of the barrier within the first fluid pathway, and at least one Peltier element is coupled to a second side of the barrier within the second fluid pathway.

## Claims

1. A system comprising:
an engine (10) having a first fluid pathway (36) and a second fluid pathway (50) at least partially adjacent to one another; and
a solid-state heat exchanger (38) configured to transfer heat from the first fluid pathway (36) to the second fluid pathway (70) upon application of an electrical current to the solid-state heat exchanger (38).

2. The system of claim 1, wherein the first fluid pathway (36) is configured to convey a first compressed air extracted from a compressor (22) of the engine (10) to a turbine wheel space (60) of the engine (10).

3. The system of claim 2, wherein the second fluid pathway (50) is configured to transfer a second compressed air discharged from the compressor (22).

4. The system of any of claims 1 to 3, further comprising:
a controller (78) configured to maintain a desired fluid temperature within the first fluid pathway (36) by adjusting the electrical current to the solid-state heat exchanger (38).

5. The system of claim 3 or 4, comprising a sensor (76) in fluid communication with the turbine wheel space (60), wherein the sensor (76) is configured to output a signal indicative of a fluid temperature within the turbine wheel space (60).

6. The system of claim 5, wherein the controller (78) configured to adjust the electrical current to the solid-state heat exchanger (38) based on the signal.

7. The system of any preceding claim, wherein the solid-state heat exchanger (38) comprises at least one Peltier element (80).

8. The system of any preceding claim, comprising a barrier (70) separating the first fluid pathway (36) from the second fluid pathway (50).

9. The system of claim 8, wherein a first Peltier element (80) is coupled to a first side (73) of the barrier (70) within the first fluid pathway (36), and a second Peltier element (80) is coupled to a second side (75) of the barrier (70) within the second fluid pathway.

10. The system of claim 8 or 9, wherein the solid-state heat exchanger (38) is distributed about at least one square meter of the barrier (70).

11. The system of any preceding claim, wherein the solid-state heat exchanger (38) is configured to decrease a temperature of fluid within the first fluid pathway (36) by at least about 25 degrees Celsius.
